# EUROPÄISCHE PATENTANMELDUNG

(11) **EP 4 393 676 A1**
(43) Veröffentlichungstag der Anmeldung: **03.07.2024**
(21) Anmeldenummer: 23210096.6
(22) Anmeldetag: 15.11.2023
(51) Int. Cl.: B29C 45/44, B29L 31/30

(54) **VERFAHREN ZUR HERSTELLUNG EINES AUSSENVERKLEIDUNGSTEILS AUS KUNSTSTOFF**

(30) Priorität: 27.12.2022 DE 102022134815
(71) Anmelder: REHAU Automotive SE & Co. KG, 95111 Rehau (DE)
(72) Erfinder: Steiner, Sebastian, 95111 Rehau (DE); Weller, Tobias, 95111 Rehau (DE)

(57) **Zusammenfassung**

Die Erfindung betrifft Verfahren zur Herstellung eines Außenverkleidungsteils (1) aus Kunststoff, wobei das Außenverkleidungsteil (1) in einem Spritzgussverfahren in einem Spritzgusswerkzeug (2) hergestellt wird, wobei das Spritzgusswerkzeug aus wenigstens zwei relativ zueinander verlagerbaren Formhälften (3, 4) besteht, wobei die Formhälften (3, 4) im geschlossenen Zustand eine, das Außenverkleidungsteil (1) geometrisch definierende, Kavität (5) zwischen sich ausbilden, wobei zunächst die Formhälften (3, 4) geschlossen und eine plastifizierte Kunststoffschmelze über wenigstens einen Anguss in die Kavität (5) eingebracht, insbesondere eingespritzt wird und, wobei nachfolgend ein Erstarren lassen der Kunststoffschmelze erfolgt und hierdurch das Außenverkleidungsteil (1) in der Kavität (5) ausgebildet wird, wobei nachfolgend die Formhälften (3, 4) geöffnet und das ausgebildete Außenverkleidungsteil (1) teilweise entformt wird, indem das Außenverkleidungsteil (1) gegenüber zumindest einer der Formhälften (3) verlagert wird, wobei ein Anguss-Freischieber (6) vorgesehen ist, der relativ zu einer der Formhälften (3) verfahrbar geführt und in dieser Formhälfte (3) gelagert ist, wobei dieser Anguss-Freischieber (6) zusammen mit dem Au-βenverkleidungsteil (1) gegenüber dieser Formhälfte (3) verlagert wird, wobei der Anguss-Freischieber (6) bei einem nachfolgenden Zurückfahren des Anguss-Freischiebers (6) in Richtung auf diese Formhälfte (3) einen, am Außenverkleidungsteil (1) abstehenden und einen relativ zur Öffnungsrichtung (R) der Formhälften (3, 4) hinterschnittigen Anguss (7) am Außenverkleidungsteil (1) entformt und das Außenverkleidungsteil (1) hierdurch aus dem geöffneten Spritzgusswerkzeug (2) vollständig entnehmbar wird.

## Beschreibung

Die vorliegende Erfindung betrifft ein Verfahren zur Herstellung eines Außenverkleidungsteils aus Kunststoff, wobei das Außenverkleidungsteil in einem Spritzgussverfahren in einem Spritzgusswerkzeug hergestellt wird, wobei das Spritzgusswerkzeug aus wenigstens zwei relativ zueinander verlagerbaren Formhälften besteht, wobei die Formhälften im geschlossenen Zustand eine, das Außenverkleidungsteil geometrisch definierende, Kavität zwischen sich ausbilden, wobei zunächst die Formhälften geschlossen und eine plastifizierte Kunststoffschmelze über wenigstens einen Anguss in die Kavität eingebracht, insbesondere eingespritzt wird und, wobei nachfolgend ein Erstarren lassen der Kunststoffschmelze erfolgt und hierdurch das Außenverkleidungsteil in der Kavität ausgebildet wird, wobei nachfolgend die Formhälften geöffnet und das ausgebildete Außenverkleidungsteil teilweise entformt wird, indem das Außenverkleidungsteil gegenüber zumindest einer der Formhälften verlagert wird, wobei ein Anguss-Freischieber vorgesehen ist, der relativ zu einer der Formhälften verfahrbar geführt und in dieser Formhälfte gelagert ist, wobei dieser Anguss-Freischieber zusammen mit dem Außenverkleidungsteil gegenüber dieser Formhälfte verlagert wird, wobei der Anguss-Freischieber bei einem nachfolgenden Zurückfahren den Anguss-Freischieber in Richtung auf diese Formhälfte einen, am Außenverkleidungsteil abstehenden und einen relativ zur Öffnungsrichtung der Formhälften hinterschnittigen Anguss am Außenverkleidungsteil entformt und das Außenverkleidungsteil hierdurch aus dem geöffneten Spritzgusswerkzeug vollständig entnehmbar wird.

Nachteilig an einem Verfahren des Standes der Technik ist, dass im Bereich des Anguss-Freischiebers bis dato keine Verbindungselemente realisierbar waren, da der Anguss-Freischieber die Kavität in diesem Bereich ausfüllt und in diesem Bereich entsprechend keine Verbindungselemente für das Außenverkleidungsteil in der Formhälfte oder in den Formhälften darstellbar sind.

Aufgabe der vorliegenden Erfindung ist es daher ein Verfahren dahingehend zu verbessern, dass im Bereich des Anguss-Freischiebers an dem Außenverkleidungsteil ein Verbindungselement ausgeformt werden kann.

Diese Aufgabe wird vorliegend gelöst durch ein Verfahren, welches wie folgt beschrieben ist: Verfahren zur Herstellung eines Außenverkleidungsteils aus Kunststoff, wobei das Außenverkleidungsteil in einem Spritzgussverfahren in einem Spritzgusswerkzeug hergestellt wird, wobei das Spritzgusswerkzeug aus wenigstens zwei relativ zueinander verlagerbaren Formhälften besteht, wobei die Formhälften im geschlossenen Zustand eine, das Außenverkleidungsteil geometrisch definierende, Kavität zwischen sich ausbilden,
wobei zunächst die Formhälften geschlossen und eine plastifizierte Kunststoffschmelze über wenigstens einen Anguss in die Kavität eingebracht, insbesondere eingespritzt wird und, wobei nachfolgend ein Erstarren lassen der Kunststoffschmelze erfolgt und hierdurch das Außenverkleidungsteil in der Kavität ausgebildet wird, wobei nachfolgend die Formhälften geöffnet und das ausgebildete Außenverkleidungsteil teilweise entformt wird, indem das Außenverkleidungsteil gegenüber zumindest einer der Formhälften verlagert wird, wobei ein Anguss-Freischieber vorgesehen ist, der relativ zu einer der Formhälften verfahrbar geführt und in dieser Formhälfte gelagert ist, wobei dieser Anguss-Freischieber zusammen mit dem Außenverkleidungsteil gegenüber dieser Formhälfte verlagert wird, wobei der Anguss-Freischieber bei einem nachfolgenden Zurückfahren des Anguss-Freischiebers in Richtung auf diese Formhälfte einen, am Außenverkleidungsteil abstehenden und einen relativ zur Öffnungsrichtung der Formhälften hinterschnittigen Anguss am Außenverkleidungsteil entformt und das Außenverkleidungsteil hierdurch aus dem geöffneten Spritzgusswerkzeug vollständig entnehmbar wird, wobei erfindungsgemäß der Anguss-Freischieber im geschlossenen Zustand des Spritzgusswerkzeuges eine mit der Kavität in Verbindung stehende Anguss-Freischieber-Kavität aufweist, wobei diese Anguss-Freischieber-Kavität ein Verbindungselement des Außenverkleidungsteils definiert, das dafür vorgesehen ist das Außenverkleidungsteil mit einer separaten Tragstruktur oder einem separaten weiteren Bauteil verbinden zu können, wobei beim Einbringen der plastifizierten Kunststoffschmelze sowohl die Kavität als auch die Anguss-Freischieber-Kavität zusammen gefüllt und das Außenverkleidungsteil und das Verbindungselement einstückig ausgebildet werden und, wobei beim Zurückfahren des Anguss-Freischiebers zusätzlich auch das Verbindungselement entformt wird. Das erfindungsgemäße Verfahren zeichnet sich dadurch aus, dass der Anguss-Freischieber eine doppelte Funktion erhält. Neben der Aufgabe den Anguss zu Entformen bildet der Anguss-Freischieber zusätzlich eine Art Miniatur-Spritzgussform innerhalb der Kavität des Spritzgusswerkzeuges, in welcher das Verbindungselement des Außenverkleidungsteils ausgebildet wird.

Das Außenverkleidungsteil kann gegenüber zumindest einer der Formhälften mittels eines Auswerfers oder mittels mehrerer Auswerfer verlagert werden.

Das Verbindungselement kann ein Rastelement oder eine Rastelementaufnahme umfassen oder ein Rastelement oder eine Rastelementaufnahme sein.

Das herzustellende Außenverkleidungsteil für ein Fahrzeug kann eine länglich ausgebildete Außenschale umfassen und der Anguss und das Verbindungselement können in der Mitte der längeren Erstreckungsrichtung der länglich ausgebildeten Außenschale angeordnet sein. Das Verbindungselement kann in einem Abstand von maximal 5 cm neben dieser Mitte der länglich ausgebildeten Außenschale ausgebildet sein.

Das Außenverkleidungsteil kann insbesondere ein Heck- oder Frontspoilers oder einer Stoßfängerverkleidung sein.

Der für das Außenverkleidungsteil verwendete Kunststoff kann insbesondere ein thermoplastisches Material, insbesondere Polypropylen umfassen. Der Kunststoff kann zusätzlich eine Faser- oder Partikelverstärkung (beispielsweise Glasfaser oder Talkum) umfassen.

Weiterhin Teil der Erfindung ist ein Spritzgusswerkzeug zur Durchführung des vorstehend beschriebenen Verfahrens, wobei das Spritzgusswerkzeug aus wenigstens zwei relativ zueinander verlagerbaren Formhälften besteht, wobei die Formhälften im geschlossenen Zustand eine, ein Außenverkleidungsteil geometrisch definierende Kavität zwischen sich ausbilden, wobei ein Anguss-Freischieber vorgesehen ist, der relativ zu einer der Formhälften verfahrbar geführt und in dieser Formhälfte gelagert ist, wobei dieser Anguss-Freischieber zusammen mit dem Außenverkleidungsteil gegenüber dieser Formhälfte verlagerbar ausgebildet ist, wobei der Anguss-Freischieber dafür vorgesehen ist bei einem Zurückfahren in Richtung auf diese Formhälfte einen, an einem hergestellten Außenverkleidungsteil abstehenden und einen relativ zur Öffnungsrichtung der Formhälften hinterschnittigen Anguss am Außenverkleidungsteil entformen zu können, wobei der Anguss-Freischieber im geschlossenen Zustand des Spritzgusswerkzeuges zusätzlich eine mit der Kavität in Verbindung stehende Anguss-Freischieber-Kavität aufweist, wobei diese Anguss-Freischieber-Kavität dafür vorgesehen ist ein Verbindungselement des Außenverkleidungsteils zu definieren, das dafür vorgesehen ist das Außenverkleidungsteil mit einer separaten Tragstruktur oder einem separaten weiteren Bauteil verbinden zu können, wobei beim Einbringen der plastifizierten Kunststoffschmelze sowohl die Kavität als auch die Anguss-Freischieber-Kavität zusammen füllbar ausgebildet sind und hierdurch das Außenverkleidungsteil und das Verbindungselement einstückig ausgebildet werden können, wobei der Anguss-Freischieber so ausgebildet ist, dass er beim Zurückfahren des Anguss-Freischiebers zusätzlich auch ein gebildetes Verbindungselement entformen kann.

Im Folgenden wird die Erfindung anhand eines Ausführungsbeispiel erläutert. Es zeigen schematisch:
- Fig. 1 bis 3: Querschnittsdarstellungen durch ein erfindungsgemäßes Spritzgusswerkzeug in verschiedenen Stadien des Verfahrensablaufs;
- Fig. 4: eine schematische Darstellung von Kavität und Anguss-Freischieber-Kavität.

In den Figuren werden gleiche oder funktionsgleiche Elemente mit den gleichen Bezugszeichen versehen.

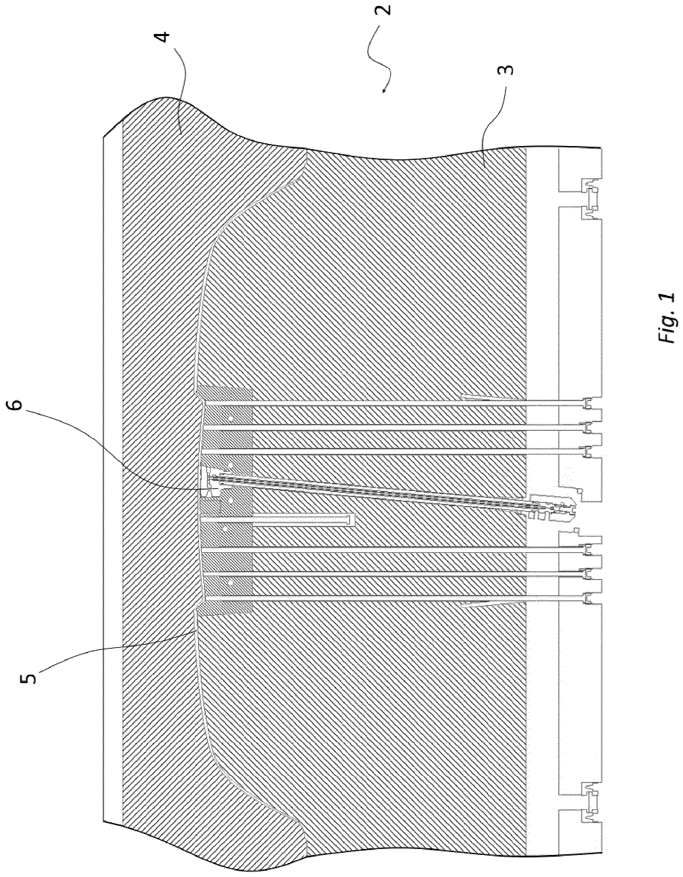

Das erfindungsgemäße Verfahren zur Herstellung eines Außenverkleidungsteils 1 aus Kunststoff wird nachfolgend näher beschrieben. Das Außenverkleidungsteil 1 wird in einem Spritzgussverfahren in einem Spritzgusswerkzeug 2 hergestellt, wobei das Spritzgusswerkzeug aus wenigstens zwei relativ zueinander verlagerbaren Formhälften 3, 4 besteht, wobei die Formhälften 3, 4 im geschlossenen Zustand eine, das Außenverkleidungsteil 1 geometrisch definierende, Kavität 5 zwischen sich ausbilden (vgl. Fig. 1).

Zunächst werden die Formhälften 3, 4 geschlossen und eine plastifizierte Kunststoffschmelze über wenigstens einen Anguss in die Kavität 5 eingebracht, insbesondere eingespritzt. Nachfolgend erfolgt ein Erstarren lassen der Kunststoffschmelze und hierdurch wird das Außenverkleidungsteil 1 in der Kavität 5 ausgebildet (hier nicht näher dargestellt).

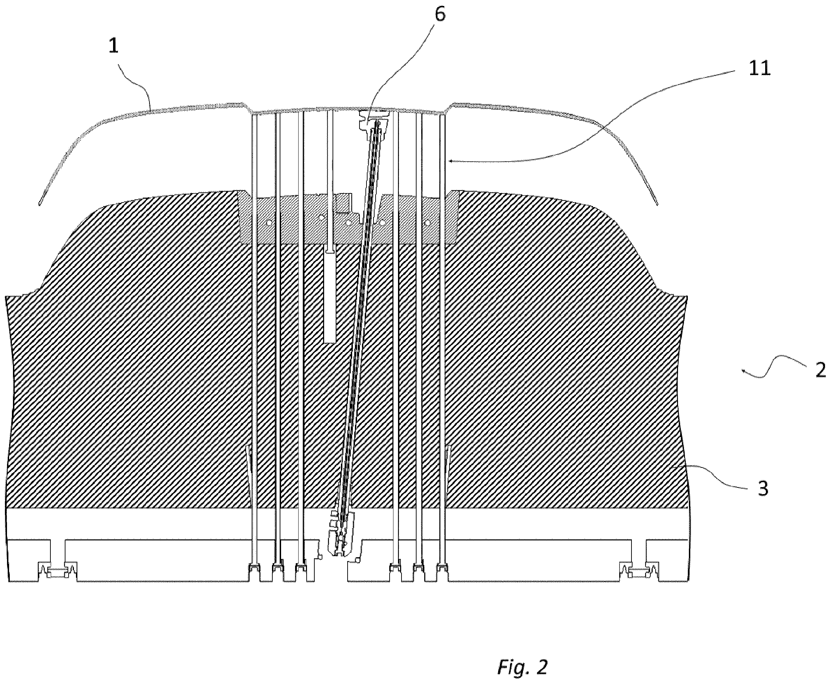

Nachfolgend werden die Formhälften 3, 4 geöffnet und das ausgebildete Außenverkleidungsteil 1 teilweise entformt, indem das Außenverkleidungsteil 1 gegenüber zumindest einer der Formhälften 3 verlagert wird (vgl. Fig. 2). Es ist ein Anguss-Freischieber 6 vorgesehen, der relativ zu einer der Formhälften 3 verfahrbar geführt und in dieser Formhälfte 3 gelagert ist.

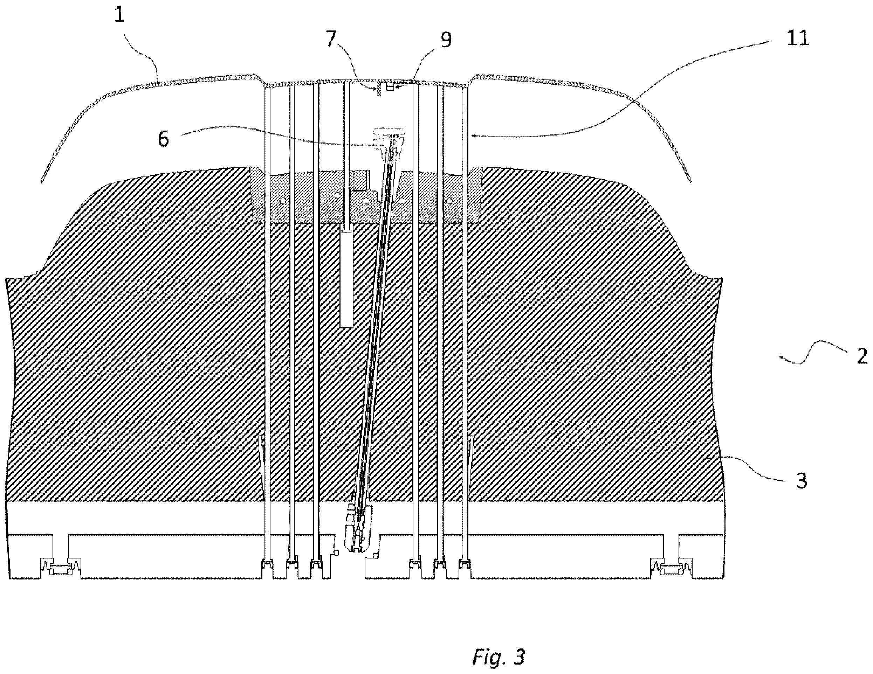

Dieser Anguss-Freischieber 6 wird zusammen mit dem Außenverkleidungsteil 1 gegenüber dieser Formhälfte 3 verlagert (vgl. Fig. 2), wobei der Anguss-Freischieber 6 bei einem nachfolgenden Zurückfahren des Anguss-Freischiebers 6 in Richtung auf diese Formhälfte 3 einen, am Außenverkleidungsteil 1 abstehenden und einen relativ zur Öffnungsrichtung R der Formhälften 3, 4 hinterschnittigen Anguss 7 am Außenverkleidungsteil 1 entformt und das Außenverkleidungsteil 1 hierdurch aus dem geöffneten Spritzgusswerkzeug 2 vollständig entnehmbar wird (vgl. Fig. 3).

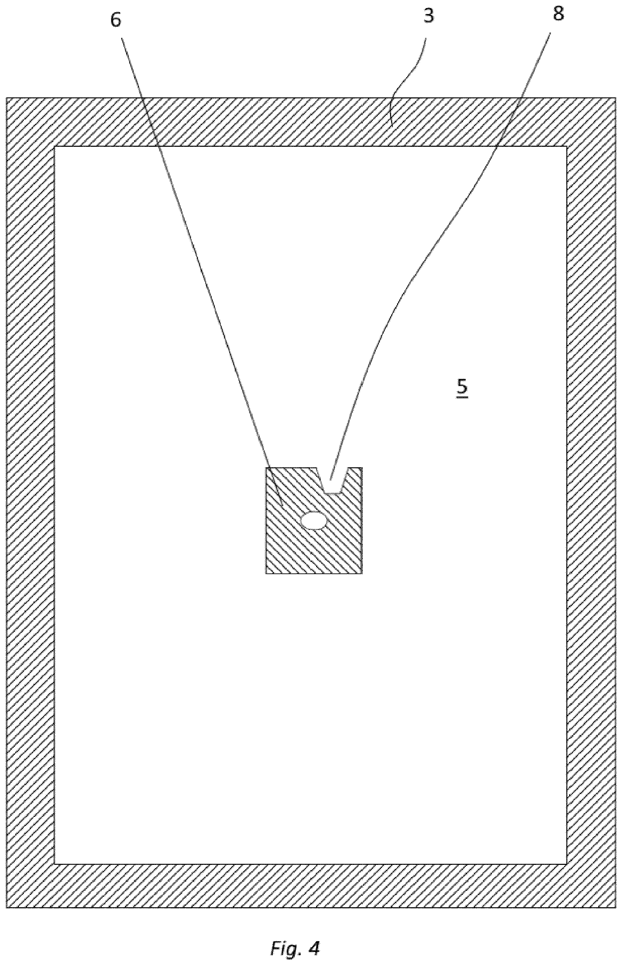

In der Fig. 4 ist schematisch dargestellt, dass der Anguss-Freischieber 6 im geschlossenen Zustand des Spritzgusswerkzeuges 2 eine mit der Kavität 5 in Verbindung stehende Anguss-Freischieber-Kavität 8 aufweist. Diese Anguss-Freischieber-Kavität 8 definiert ein Verbindungselement 9 des Außenverkleidungsteils 1, das dafür vorgesehen ist das Außenverkleidungsteil 1 mit einer separaten Tragstruktur oder einem separaten weiteren Bauteil verbinden zu können (vgl. Fig. 3).

Beim Einbringen der plastifizierten Kunststoffschmelze werden sowohl die Kavität 5 als auch die Anguss-Freischieber-Kavität 8 zusammen gefüllt und das Außenverkleidungsteil 1 und das Verbindungselement 9 einstückig ausgebildet. Beim Zurückfahren des Anguss-Freischiebers 6 wird zusätzlich auch das Verbindungselement 9 entformt (vgl. Fig. 3).

Das Außenverkleidungsteil 1 wird gegenüber zumindest einer der Formhälften 3 mittels mehrerer Auswerfer 11 verlagert.

Das Verbindungselement 9 wird durch ein Rastelement gebildet.

Das herzustellende Außenverkleidungsteil 1 für ein Fahrzeug umfasst eine länglich ausgebildete Außenschale und der Anguss 7 und das Verbindungselement 9 sind in der Mitte der längeren Erstreckungsrichtung der länglich ausgebildeten Außenschale angeordnet. Das Verbindungselement 9 ist in einem Abstand von maximal 5 cm neben dieser Mitte der länglich ausgebildeten Außenschale ausgebildet.

Das Außenverkleidungsteil kann ein Heck- oder Frontspoilers oder einer Stoßfängerverkleidung sein.

In den Fig. 1 bis Fig. 4 ist ebenfalls das erfindungsgemäße Spritzgusswerkzeug zur Durchführung des vorstehend beschriebenen Verfahrens dargestellt:
Das Spritzgusswerkzeug 2 besteht aus wenigstens zwei relativ zueinander verlagerbaren Formhälften 3, 4, wobei die Formhälften 3, 4 im geschlossenen Zustand eine, ein Außenverkleidungsteil 1 geometrisch definierende Kavität 5 zwischen sich ausbilden. Es ist ein Anguss-Freischieber 6 vorgesehen, der relativ zu einer der Formhälften 3 verfahrbar geführt und in dieser Formhälfte 3 gelagert ist.

Dieser Anguss-Freischieber 6 ist zusammen mit dem Außenverkleidungsteil 1 gegenüber dieser Formhälfte 3 verlagerbar ausgebildet, wobei der Anguss-Freischieber 6 dafür vorgesehen ist bei einem Zurückfahren in Richtung auf diese Formhälfte 3 einen, an einem hergestellten Außenverkleidungsteil 1 abstehenden und einen relativ zur Öffnungsrichtung R der Formhälften 3, 4 hinterschnittigen Anguss 7 am Außenverkleidungsteil 1 entformen zu können.

Der Anguss-Freischieber 6 weist im geschlossenen Zustand des Spritzgusswerkzeuges 2 zusätzlich eine mit der Kavität 5 in Verbindung stehende Anguss-Freischieber-Kavität 8 auf. Diese Anguss-Freischieber-Kavität 8 ist dafür vorgesehen ein Verbindungselement 9 des Außenverkleidungsteils 1 zu definieren, das dafür vorgesehen ist das Außenverkleidungsteil 1 mit einer separaten Tragstruktur oder einem separaten weiteren Bauteil verbinden zu können.

Beim Einbringen der plastifizierten Kunststoffschmelze sind sowohl die Kavität 5 als auch die Anguss-Freischieber-Kavität 8 zusammen füllbar ausgebildet und hierdurch können das Außenverkleidungsteil 1 und das Verbindungselement 9 einstückig ausgebildet werden. Der Anguss-Freischieber 6 ist so ausgebildet, dass er beim Zurückfahren des Anguss-Freischiebers 6 zusätzlich auch ein gebildetes Verbindungselement 9 entformen kann.

## Patentansprüche

1. Verfahren zur Herstellung eines Außenverkleidungsteils (1) aus Kunststoff,
wobei das Außenverkleidungsteil (1) in einem Spritzgussverfahren in einem Spritzgusswerkzeug (2) hergestellt wird, wobei das Spritzgusswerkzeug aus wenigstens zwei relativ zueinander verlagerbaren Formhälften (3, 4) besteht, wobei die Formhälften (3, 4) im geschlossenen Zustand eine, das Außenverkleidungsteil (1) geometrisch definierende, Kavität (5) zwischen sich ausbilden,
wobei zunächst die Formhälften (3, 4) geschlossen und eine plastifizierte Kunststoffschmelze über wenigstens einen Anguss in die Kavität (5) eingebracht, insbesondere eingespritzt wird und,
wobei nachfolgend ein Erstarren lassen der Kunststoffschmelze erfolgt und hierdurch das Außenverkleidungsteil (1) in der Kavität (5) ausgebildet wird,
wobei nachfolgend die Formhälften (3, 4) geöffnet und das ausgebildete Außenverkleidungsteil (1) teilweise entformt wird, indem das Außenverkleidungsteil (1) gegenüber zumindest einer der Formhälften (3) verlagert wird,
wobei ein Anguss-Freischieber (6) vorgesehen ist, der relativ zu einer der Formhälften (3) verfahrbar geführt und in dieser Formhälfte (3) gelagert ist,
wobei dieser Anguss-Freischieber (6) zusammen mit dem Außenverkleidungsteil (1) gegenüber dieser Formhälfte (3) verlagert wird, wobei der Anguss-Freischieber (6) bei einem nachfolgenden Zurückfahren des Anguss-Freischiebers (6) in Richtung auf diese Formhälfte (3) einen, am Außenverkleidungsteil (1) abstehenden und einen relativ zur Öffnungsrichtung (R) der Formhälften (3, 4) hinterschnittigen Anguss (7) am Außenverkleidungsteil (1) entformt und das Außenverkleidungsteil (1) hierdurch aus dem geöffneten Spritzgusswerkzeug (2) vollständig entnehmbar wird,
**dadurch gekennzeichnet, dass**
der Anguss-Freischieber (6) im geschlossenen Zustand des Spritzgusswerkzeuges (2) eine mit der Kavität (5) in Verbindung stehende Anguss-Freischieber-Kavität (8) aufweist, wobei diese Anguss-Freischieber-Kavität (8) ein Verbindungselement (9) des Außenverkleidungsteils (1) definiert, das dafür vorgesehen ist das Außenverkleidungsteil (1) mit einer separaten Tragstruktur oder einem separaten weiteren Bauteil verbinden zu können, wobei beim Einbringen der plastifizierten Kunststoffschmelze sowohl die Kavität (5) als auch die Anguss-Freischieber-Kavität (8) zusammen gefüllt und das Außenverkleidungsteil (1) und das Verbindungselement (9) einstückig ausgebildet werden und, wobei beim Zurückfahren des Anguss-Freischiebers (6) zusätzlich auch das Verbindungselement (9) entformt wird.

2. Verfahren zur Herstellung eines Außenverkleidungsteils (1) nach Anspruch 1, **dadurch gekennzeichnet, dass** das Außenverkleidungsteil (1) gegenüber zumindest einer der Formhälften (3) mittels eines Auswerfers oder mittels mehrerer Auswerfer (11) verlagert wird.

3. Verfahren zur Herstellung eines Außenverkleidungsteils (1) nach Anspruch 1 oder 2, **dadurch gekennzeichnet, dass** das Verbindungselement (9) ein Rastelement oder eine Rastelementaufnahme umfasst.

4. Verfahren zur Herstellung eines Außenverkleidungsteils (1) nach einem der vorstehenden Ansprüche, **dadurch gekennzeichnet, dass** das herzustellende Außenverkleidungsteil (1) für ein Fahrzeug eine länglich ausgebildete Außenschale umfasst und der Anguss (7) und das Verbindungselement (9) in der Mitte der längeren Erstreckungsrichtung der länglich ausgebildeten Außenschale angeordnet sind.

5. Verfahren zur Herstellung eines Außenverkleidungsteils (1) nach Anspruch 4, **dadurch gekennzeichnet, dass** das Verbindungselement (9) in einem Abstand von maximal 5 cm neben dieser Mitte der länglich ausgebildeten Außenschale ausgebildet ist.

6. Verfahren zur Herstellung eines Außenverkleidungsteils (1) nach einem der vorstehenden Ansprüche, **dadurch gekennzeichnet, dass** das Außenverkleidungsteil ein Heckoder Frontspoilers oder einer Stoßfängerverkleidung ist.

7. Spritzgusswerkzeug (2) zur Durchführung des Verfahrens nach einem der Ansprüche 1 bis 6, wobei das Spritzgusswerkzeug (2) aus wenigstens zwei relativ zueinander verlagerbaren Formhälften (3, 4) besteht, wobei die Formhälften (3, 4) im geschlossenen Zustand eine, ein Außenverkleidungsteil (1) geometrisch definierende Kavität (5) zwischen sich ausbilden, wobei ein Anguss-Freischieber (6) vorgesehen ist, der relativ zu einer der Formhälften (3) verfahrbar geführt und in dieser Formhälfte (3) gelagert ist, wobei dieser Anguss-Freischieber (6) zusammen mit dem Außenverkleidungsteil (1) gegenüber dieser Formhälfte (3) verlagerbar ausgebildet ist, wobei der Anguss-Freischieber (6) dafür vorgesehen ist bei einem Zurückfahren in Richtung auf diese Formhälfte (3) einen, an einem hergestellten Außenverkleidungsteil (1) abstehenden und einen relativ zur Öffnungsrichtung (R) der Formhälften (3, 4) hinterschnittigen Anguss (7) am Außenverkleidungsteil (1) entformen zu können,
**dadurch gekennzeichnet, dass**
der Anguss-Freischieber (6) im geschlossenen Zustand des Spritzgusswerkzeuges (2) zusätzlich eine mit der Kavität (5) in Verbindung stehende Anguss-Freischieber-Kavität (8) aufweist, wobei diese Anguss-Freischieber-Kavität (8) dafür vorgesehen ist ein Verbindungselement (9) des Außenverkleidungsteils (1) zu definieren, das dafür vorgesehen ist das Außenverkleidungsteil (1) mit einer separaten Tragstruktur oder einem separaten weiteren Bauteil verbinden zu können, wobei beim Einbringen der plastifizierten Kunststoffschmelze sowohl die Kavität (5) als auch die Anguss-Freischieber-Kavität (8) zusammen füllbar ausgebildet sind und hierdurch das Außenverkleidungsteil (1) und das Verbindungselement (9) einstückig ausgebildet werden können, wobei der Anguss-Freischieber (6) so ausgebildet ist, dass er beim Zurückfahren des Anguss-Freischiebers (6) zusätzlich auch ein gebildetes Verbindungselement (9) entformen kann.
